# EUROPEAN PATENT APPLICATION

(11) **EP 1 865 455 A1**
(43) Date of publication of application: **12.12.2007**
(21) Application number: 06011775.1
(22) Date of filing: 07.06.2006
(51) Int. Cl.: G06Q 30/00

(54) **A virtual advertising system**

(71) Applicant: Seac02 S.r.l., 10121 Torino (IT)
(72) Inventor: Carignano, Andrea, 10121 Torino (IT)
(74) Representative: Grünecker, Kinkeldey, Stockmair & Schwanhäusser Anwaltssozietät

(57) **Abstract**

According to the present invention there is provided a virtual advertising system comprising means for storing at least one panorama content object of a real world, means for generating virtual image meta data from the panorama content object, means for storing at least one advertising content object, means for re-rendering the advertising content objects according to the virtual image meta data, and means for superimposing the displayed panorama content object with the re-rendered advertising content object at a defined position.

## Description

### FIELD OF THE PRESENT INVENTION

Generally, the present invention relates to a computer system that is configured to store and display real world panorama content object, re-rendering advertising content objects according to the panorama content attributes and superimpose the panorama content with the re-rendered advertising content object.

### BACKGROUND ART

The rapid spread of the internet as a day-to-day information source has established the internet as a general and often preferred source of information. However, although the overall offer of information increases with the significantly increasing number of websites, it has at the same time become more and more difficult for internet users to identify "quality proved" content and in particular to quickly find answers to specific questions relating to a specific field of interest.

For example, users planning a holiday to a certain location are generally faced with information offers distributed by various cities, regional administrations, companies, travel agencies, airlines and so on operating in the context of the specific location. Therefore, answering the need of quickly accessible "quality proven" content information service providers have emerged which specialize their content offer to a particular field of interest. These service providers may be able to attract an increasing number of visitors to their website as they can offer a focused pool of information as well as specialized information retrieval tools thus enabling users to quickly gather the specific information they would need. In particular, such specialized information service providers can for example be found with regard to holiday and/or travel information. Such information service providers or rather content service providers often offer digitized panorama content in order to enable the interested users to quickly get an original impression from the location they might be interested to travel to.

Generally, a content service provider however is faced with the problem that they might only be able to attract a lot of interested users in case they offer their content to the users more or less free of charge. On the other hand, the effort to editorially work out the specific content, to develop and provide the above-mentioned information retrieval tools, to build up and maintain the underlying web server system infrastructure and so on generates significant costs. As these content service providers seldomly can re-finance these cost based on user subscriptions, they have to motivate third-party companies to advertise their products / services on the content service provider's web site. Revenues stemming from these advertisements in most of the cases provide the most important economical basis for these content service providers. Generally the advertisement objects, e.g. picture of products, vendor logos or movies, are then displayed in context with the specific information displayed to the user.

As is generally known in the field of advertising, advertising tends to be most efficient if the advertised product/service is displayed to the right audience or target group. Moreover, advertising may have a higher likelihood to attract new customers to the advertised product/services in case the advert is perceived as naturally integrated into the visual context of a particular customer. In contrast, advertising may even have a negative impact on customer attraction in case the advertising is perceived by a customer as disturbing and interfering the present context. Therefore, for example, product placement within cinema movies is generally perceived as rather efficient form of advertising in that sense. However, for the case of content service providers the user's focus of interest is generally not directed to the adverts' content but to the specific editorial information content provided. Thus the content service provider has to choose how and where to position particular adverts.

Currently for this problem technical solutions are known, which enable the content service provider to position a particular advert at a position next to the requested editorial content (e.g. a panorama picture). One popular application of these techniques is for Example the well know Google® search engine, which displays adverts next to (i.e. on the right side) the search displayed at the left side. Choosing these techniques a content service provider might achieve positioning of the advert in a way which is not perceived by the user as disturbing or interfering their information retrieval. However, in this case, an important shortcoming is that the advert is likely to be positioned outside of the user's focus of interest and thus might not even be noticed be the user. This as a consequence may lead to the advertising companies perceiving this kind of positioning of their respective advert as not attractive and thus, compromising content service provider's economic basis.

As an alternative, technologies are known which allow the content service provider to superimposed the information content requested by the user with an advertising content object which first must be checked by the user before user can actually get access to the requested content. Using these techniques, the content service provider can assure that any user requesting specific content has made a notice of the advert. Thus, this form of advertising may generally be perceived by advertising companies as rather attractive. However, costumer surveys have shown that this form of advertising is perceived by a lot of users as disturbing and interfering their information retrieval process. Thus, the application of these techniques generally render the overall attractiveness of the respective websites as lower.

Therefore, there is a need for an advertising system and method that allows the display of advertising content objects within the focus of interest of website users without interfering and disturbing the information retrieval experience of the user.

### SUMMARY OF THE PRESENT INVENTION

According to one aspect of the present invention, this object is solved by a virtual advertising system comprising means for storing panorama content objects of a real world, for example panorama pictures with different angles up to 360° and/or movies, means for generating virtual image meta data from the panorama content object, means for storing advertising content objects, means for re-rendering the advertising content objects according to the virtual image meta data, and finally, means for superimposing the displayed panorama content object with the re-rendered advertising content object at a predefined and tracked image position.

Consequently, according to the inventive virtual advertising system, previously stored advertising content objects, for example, a company logo, product pictures or movies, may be "naturally" integrated into a panorama content object. A panorama content object may preferably be for example a picture of a particular panorama situation like a city panorama or a particular landscape with different observation angles of up to 360°. Panorama objects may by a requesting user be watched for example as a fixed image display but preferable the observation angles might also be influenced by the user such that the user may be able to experience an up to 360° impression of the particular The inventive virtual advertising system further allows an advertising content object to be re-rendered such that the re-rendered advertising content object matches the virtual image meta data generated from the original panorama content object. Contrary to the above-described conventional advertising positioning techniques the inventive virtual advertising system enables the re-rendered advertising content object to be superimposed on and thus integrated into the displayed panorama content.

By re-rendering the advertising content object according to the previously generated panorama content meta data the appearance of the advertising content object may be achieved such that the re-rendered advertising objects substantially matches for example, the illumination conditions, viewing angles and viewpoint of the displayed panorama content. Illumination conditions, viewing angles and viewpoints are however only preferred examples on relevant aspects of virtual image meta data, also other relevant aspects may be taken into account for re-rendering advertising content objects without departing from the scope of the present invention. Moreover by re-rendering the advertising content object according to the panorama content's virtual image meta-data an appearance of the advertising content object may be achieved such that the user may perceive the advertising content object as a "natural" part of the displayed panorama content not substantially deviating from the overall appearance of the displayed panorama content object.

Thus the inventive virtual advertising system enables embedding of the advertising content objects into the displayed panorama content in a realistic manner, which leads to the user perceiving the advertising content as "naturally" integrated into the particular panorama content. Thus, in contrast to the above-described techniques, this positioning of adverts assures that the advert is displayed within the focus of interest of the user and is, at the same time, not perceived by the user as disturbing or interfering with their information retrieval.

In a further preferred embodiment, the particular advertising content object chosen to be displayed within the panorama content is chosen based on information retrieved from a stored user profile, for example, the particular information context and/or the time of day. Thus, this further embodiment provides the benefit of displaying specific advertising content which is most suited to the particular user's interest and history.

In a further preferred embodiment the advertising object may preferably be placed within a placeholder object which is tracked within the panorama content object such that the user may change the viewing angle of the panorama content object within a range of up to a 360°.

In a further preferred embodiment the advertising content object to be re-rendered may be an advertising movie and the re-rendering may applied to any of the frames of the movie in real-time.
In a even further embodiment, the displayed re-rendered advertising content object may be enriched with vendor specific meta data allowing the virtual advertising system to redirect the user to the vendor's website and/or vendor's catalogue. Thus, this embodiment further provides the benefit of providing the user with a functionality most similar to a well-known internet-link enabling the user to directly click on the displayed re-rendered advertising content object and thereby entering the specific vendor's product/service offer.

Further preferred embodiments are defined in the appended claims and will also be described in the following with reference to the accompanying drawings, in which:

### BRIEF DESCRIPTION OF THE DRAWINGS

Figure 1 schematically shows a virtual advertising system in accordance with the present invention;
Figure 2 schematically shows a displayed panorama content object superimposed with a re-rendered advertising content object; and
Figure 3 depicts a flow chart for illustrating the operation of the virtual advertising system.

### DETAILED DESCRIPTION OF THE PRESENT INVENTION

While the present invention is described with reference to the embodiments as illustrated in the following detailed disclosure as well as in the drawings, it should be understood that the following detailed description as well as the drawings are not intended to limit the present invention to the particular illustrative embodiments disclosed, but rather that the illustrative embodiments as described merely exemplify the various aspects of the present invention, the scope of which is defined by the appended claims.

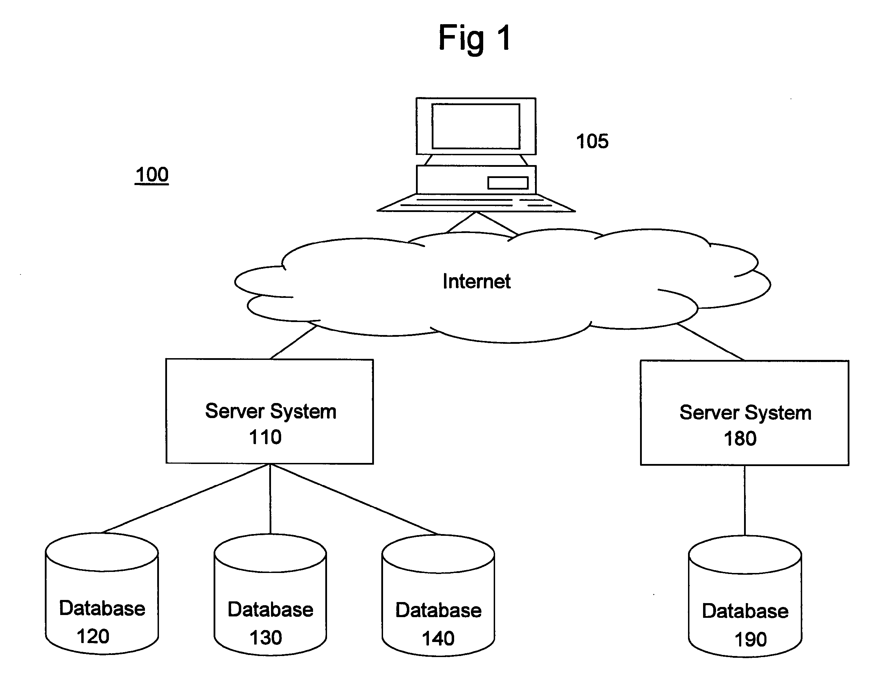

Figure 1 schematically shows a virtual advertising system 100 according to the present invention in a simplified illustration. The system 100 comprises a user computer system 105 which is connected via the internet to the virtual advertising service system 110. The server system 110 has access to a number of databases 120, 130, 140. The number of databases, however, is rather illustrative and can vary in different implementations of the present invention. In the preferred embodiment illustrated in Figure 1 database 120 stores digital panorama content objects. Furthermore, the illustrated server system 110 is configured to analyze the digital panorama content object with respect to, for example, the illumination conditions and viewpoints/viewing angles of the panorama contents stored in database 120. Thus, server system 110 is for example configured to analyze the spatial relationships of the various objects being part of the panorama content, for example, buildings. Furthermore, server system 110 is preferably configured to generate from the analysis of the original panorama contents virtual image meta data comprising information about spatial relationships, points of view, viewing angles, illumination, and other conditions of the original panorama content.

The virtual image meta data corresponding to a particular panorama content is stored in database 120 in a specific format which is configured to comprise lighting information of an entire 360° (360 degree) panorama image. Preferably the lighting information consists amongst others of diffuse light intensity and of a specular light map. Thus the information stored in the virtual image meta data enables to virtually illuminate reflecting surfaces such as for example metal such that a respective surface matches the naturally lighting conditions of a respective panorama content.

Furthermore, database 130 stores advertising content objects preferably, for example, pictures of products, logos of specific vendors or alternatively advertising movies. Preferably server system 110 is configured to store additionally to the actual advertising content object (e.g. a movie or a still image), material properties of these objects. The material properties preferably reflect the surface material of the advertising content object such that this information can be used to generate the virtual illumination for the advertising content object. Therefore, material properties preferably determine how the respective advertising content object is illuminated, for example answering the question whether the object has a reflecting surface, a metal surface etc. In addition, database 130 stores vendor meta data or rather content object meta data together with a particular advertising content object which preferably comprises, for example, link information about a vendor's catalogue or websites as well as the relevancy of the particular advertising content object with respect to specific information context, user attributes and time of day. However, these specific meta data features are rather exemplary and other implementations according to the present invention may chose additional or other meta data features. In addition, data base 140 stores user profiles. In that respect, the server system 110 is preferably configured to enable a user visiting a website that is hosted by server system 110 to register to that website. Following that registration, the server system 110 is configured to track the user's activities on the web site and generates a history of these activities. Specific user attributes as, for example, age, location, travelling habits and so on, together with the user's activity history is then stored by a computer system 110 in a retrievable digital format into database 140. The server system 110 is then configured to enable a user via suitable information retrievable tools to access specific panorama contents matching the information needs of the specific user. Furthermore, server system 110 is preferably configured to retrieve in response to the user's request for a specific panorama content the user's profile stored in the database 140. Moreover, servers system 110 is preferably configured to generate based on a particular user's profile stored in database 140, the time of day and/or the specific panorama content requested by the user a relevancy measure which allows the server system 110 to identify a particular content object stored in the database 130 that matches most suitable the calculated relevancy measure.

In addition, server system 110 is preferable configured to retrieve the advertising content object stored in database 130 that has been identified to match the generated relevancy measure. Moreover, server system 110 is prepared to re-render the advertising content object to match the virtual image meta data stored in database 110 according to the particular panorama content requested by the user. In particular the server system 110 is configured to retrieve together with the advertising object the material properties stored in database 130. Moreover the server system 110 is configured to use the material properties, the virtual image data and a the indented three-dimensional (3D) position of the advertising content object within the panorama content to re-render the actual advertising content object. In that regard server system 110 comprises means for a tracking system that performs the tracking of the advertising content object in an optical way such that server system 110 recognizes a tracking pattern, for example a piece of the texture of the panorama content, e.g. a facade of a house. In addition server system 110 is configured to alternatively synthetically generate the tracking pattern such that the tracking pattern can be positioned inside the panorama content. The advertising content object which is indented to superimpose to the panorama content thereby is preferably positioned within the panorama content relative to the detected tracking pattern. In particular the tracking system preferably returns a 3D-position and a 3D-rotation matrix. The server system 110 is then prepared to position the advertising content object relative to these coordinates. The transformation relative to the tracking pattern is preferably included into the panorama content data or the virtual image data.

Server system 110 is then preferably configured to superimpose requested panorama content with the re-rendered advertising content object and to further display the panorama content superimposed with the re-rendered advertising content object at the user's personal computer 105. Preferably the panorama content object contains a placeholder object which defines a position and size that is designed to contain a re-rendered advertising content object. Preferably the placeholder is positioned such that the server system 110 can be configured to track the position of the placeholder object relative to the panorama content object's content. In particular in case the panorama content object is a 360° panorama image the panorama image is preferably displayed such that the user may chose within the 360° panorama which part is of interest an should be displayed. Independently from the particular part of the up to 360° panorama displayed to the user the server system 110 is configured to track the position of the placeholder object such that the relative position of the placeholder object remains substantially the same. In an alternative embodiment the relative position may change depending on the specific panorama displayed depending on the chosen viewing angle so that the placeholder object preferably does not interfere with the panorama display perception of the user.

In a preferred embodiment Server system 110 is configured to perform the tracking of the placeholder object in an optical way such that server system 110 recognizes a tracking pattern, for example a piece of the texture of the panorama content, e.g. a facade of a house. In addition server system 110 is configured to alternatively synthetically generate the tracking pattern such that the tracking pattern can be positioned inside the panorama content. The placeholder object which is superimposed to the panorama content thereby augments the panorama scene displayed and is preferably positioned within the panorama content relative to the detected tracking pattern. In a preferred embodiment the placeholder object could be a billboard which is always oriented perpendicularly to the view ray, in an alternative preferred embodiment the placeholder object could be positioned in a fixed transformation relative to the detected tracking pattern. In that respect the server system 110 is configured to perform the recognition as well as the synthetically generation of the tracking pattern such that all six degrees of freedom relative to the eye position are returned.

Thereby, a user is displayed a panorama content that has superimposed a virtual advertising object that through the re-rendering performed by server system 110 is naturally integrated into the content context of the displayed panorama content, matching the virtual image meta data, in particular, the illumination and point of view/viewing angle conditions of the particular panorama content.

In a further preferred embodiment the advertising content object may also be an advertising movie. In that embodiment the placeholder object is prepared to contain and display a re-rendered advertising movie superimposed to the panorama content object such that the user perceives the advertising movie as a rather natural part of the panorama content. Preferably server system 110 is therefore configured to re-render each frame of an advertising movie in real-time depending on the panorama content view displayed to the user at a particular point of time.

Moreover, the server system 110 is preferably configured to track the mouse pointer movements and activities of the particular user operating personal PC 105. In particular, server system 110 is preferably configured to identify whether or not the particular user clicks on the displayed re-rendered advertising objects with a mouse pointer device. In case server system 110 identifies a user click on the displayed re-rendered advertising object, the server system 110 is configured to redirect the user to a particular vendor's server system 180 that, based on the content stored in the database 190, is configured to provide the user with access to the particular vendor's product/service offer and were cataloged. In that regard server system 110 is configured to determine whether the advertising object was clicked on by the user. Preferably the server system 110 uses ray- object intersection to perform this task. In case the server system 100 detects that the user has clicked on the advertising content object the server system 110 is configured to open up the vendor content corresponding to the advertising content object, that is stored in the advertising content meta data. In one preferred embodiment the server system 110 opens the respective vendor content within its own realm, by for example rendering an html-page inside the virtual advertising object. Alternatively the server system 110 may be configured to trigger a signal which is externally connected to an appropriate action, e.g. to open new web browser window.

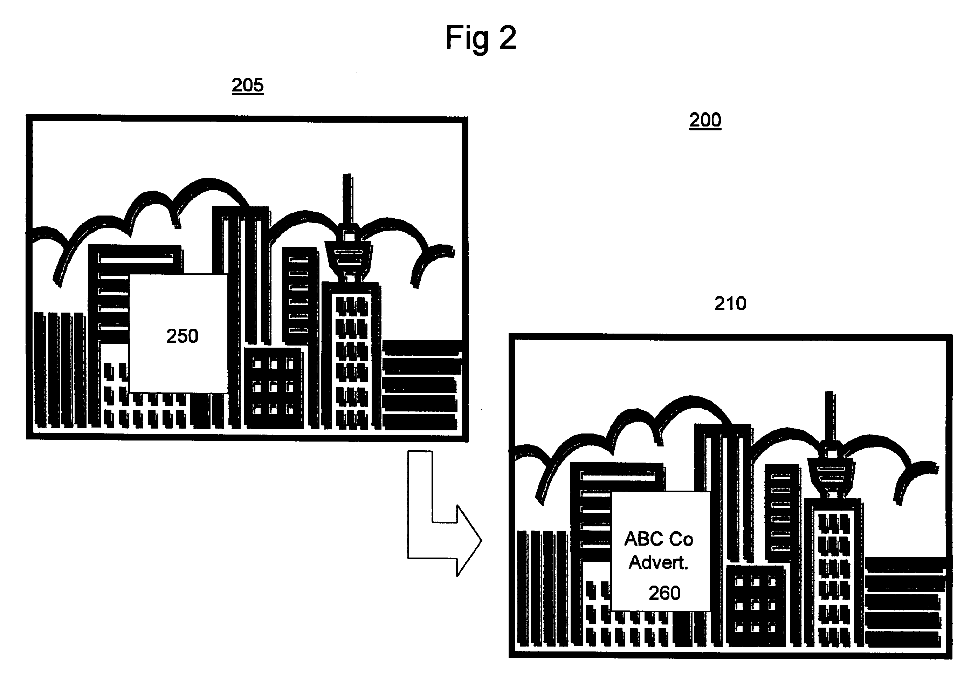

Figure 2 schematically shows a panorama content object 205 which has integrated a place holder object 250 superimposing panorama content 205. The place holder object 250 is preferably placed in a position in the panorama content object 205 that may not be perceived by a particular user as interfering or disturbing the viewing experience when the panorama content 205 is displayed. Moreover, Figure 200 shows the panorama content 210 which has superimposed the advertising content object "ABC co-advert" 260 which has been re-rendered as described above with reference to Fig. 1. As can be seen, the place holder object 250 is preferably configured such that a re-rendered advertising content object 260 can be matched into the position marked by place holder object 250. In a preferred embodiment the tracking of the placeholder object is performed in an optical way such that a tracking pattern is recognized, for example a piece of the texture of the panorama content, e.g. a facade of a house. Alternatively the tracking pattern might be generated synthetically such that the tracking pattern can be positioned inside the panorama content. The placeholder object which is superimposed to the panorama content thereby augments the panorama scene displayed and is preferably positioned within the panorama content relative to the detected tracking pattern. In a preferred embodiment the placeholder object could be a billboard which is always oriented perpendicularly to the view ray, in an alternative preferred embodiment the placeholder object could be positioned in a fixed transformation relative to the detected tracking pattern. In that regard the tracking system is configured to perform the recognition as well as the synthetically generation of the tracking pattern such that all six degrees of freedom relative to the eye position are returned.

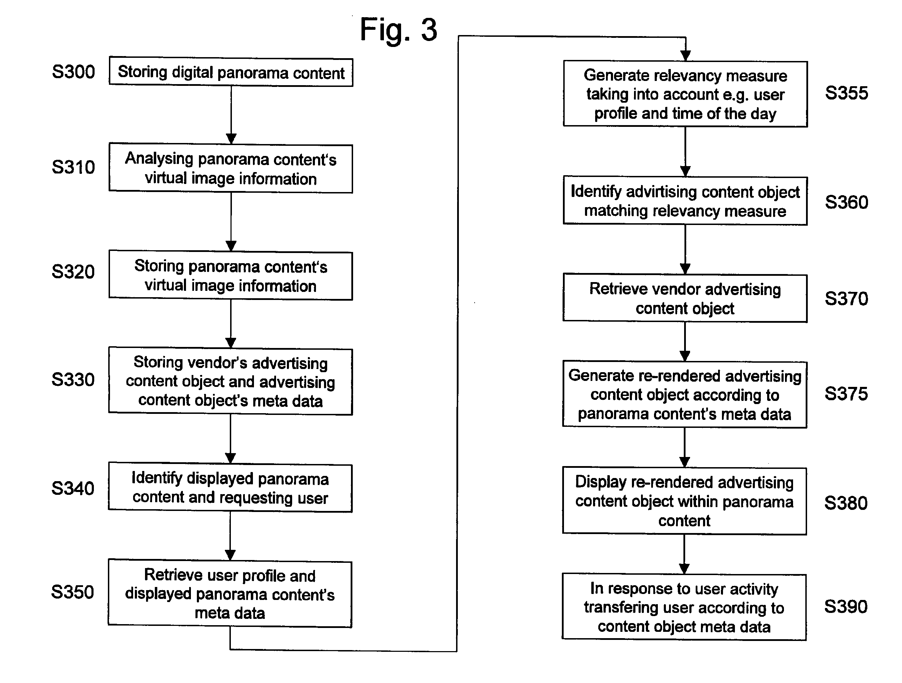

Figure 3 depicts a flow chart for illustrating the configuration of the inventive virtual advertising system. In step S300, digital panorama content has digital panorama contents that are stored in database 120. Moreover, in step S310, the stored panorama content is analyzed by computer system 110 with respect to virtual image meta data in particular point of view / viewing angle and illumination information, thus, generating virtual image meta data that is stored in step 320 together with the panorama content object. Moreover, in step 330, a vendor's advertising content object and content object meta data is stored in database 130. The content object meta data may, for example, comprise information about the internet address of the specific vendor's website and/or when a catalogue and products/services. In step 340, requested panorama content and the requesting user is identified. Based on the identifying or the requesting user in step 340, in step 350, the specific user's profile is retrieved as well as the requested panorama content's meta data. In step 355, a relevancy measure is generated taking into account the specific user's profile, the information context of the requested panorama content and, for example, the time of day. Based on the relevancy measure in step 360, an advertising content object is identified which matches the relevancy measure. Moreover, in step 370, a specific vendor's advertising content object is retrieved which has been identified in step 360. In the next step 375, the advertising content object is re-rendered to match the panorama content's meta data, in particular, with respect to the illumination conditions, and/or the point of view/viewing angles of the requested panorama content. In step 380, the panorama content is displayed superimposed with the re-rendered advertising content object. In case the user clicks on the displayed re-rendered advertising content object, the user is transferred according to the link information stored in the advertising content meta data in step 390.

## Claims

1. A virtual advertising system comprising:
means for storing at least one panorama content object of a real world;
means for generating virtual image meta data from the panorama content object;
means for storing at least one advertising content object;
means for re-rendering the advertising content objects according to the virtual image meta data; and
means for superimposing the displayed panorama content object with the re-rendered advertising content object at a defined position.

2. The system according to claim 1 wherein the panorama content is a 360 degree panorama image.

3. The system according to claim 2 wherein at a particular point in time only a fraction of the 360 degree panorama content is displayed upon user request.

4. The system according to one of claims 1-3 wherein superimposing comprises integrating the advertising content object such that the display of the advertising content object naturally matches into the display of the panorama content object.

5. The system according to one of claims 1-4 wherein the advertising content object is a still image.

6. The system according to one of claims 1-4 wherein the advertising content object is a movie.

7. The system according to claim 6 wherein superimposing comprises integrating the movie into the display of the panorama content object such that every frame of the movie is re-rendered in accordance with the virtual image meta data of the displayed panorama content.

8. The system according to one of claims 1-7 wherein the system further comprises
means for storing a user profile;
means for interpreting the information context of the displayed panorama content; and
means for choosing an advertising content object to be displayed based on at least one of a stored user profile, an information context of the displayed panorama content and/or the time of day.

9. The system according to one of claims 1-8 wherein the system further comprises means for integrating and tracking a placeholder object within the panorama content object and wherein the advertising content object is positioned within the placeholder object while being displayed.

10. The system according to claim 1-9 wherein the position of the advertising content object is tracked within the panorama content object such that the user may change the viewing angle of the panorama content object within a range of up to a 360 degree and the advertising content object is re-rendered matching the virtual image meta data according to the viewing angle currently being displayed.

11. The system according to claim 6 wherein the advertising content object is re-rendered such that any of the frames of the movie is re-rendered in real-time.

12. The system according to any of claims 1-11 wherein the system further comprises means for re-directing a user upon request, wherein the displayed advertising content object is enriched with vendor meta data such that the virtual advertising system redirects the user upon request according to the vendor meta data.

13. A method for creating and displaying virtual advertising comprising the steps of:
storing at least one panorama content object of a real world;
generating virtual image meta data from the panorama content object;
storing at least one advertising content object;
re-rendering the advertising content object according to the virtual image meta data; and
superimposing the displayed panorama content object with the re-rendered advertising content object at a defined position.

14. The method according to claim 13 wherein the panorama content is a 360 degree panorama image.

15. The method according to claim 14 wherein at a particular point in time only a fraction of the 360 degree panorama content is displayed upon user request.

16. The method according to one of claims 13-15 wherein superimposing comprises integrating the advertising content object such that the display of the advertising content object naturally matches into the display of the panorama content object.

17. The method according to one of claims 13-16 wherein the advertising content object is a still image.

18. The method according to one of claims 13-16 wherein the advertising content object is a movie.

19. The method according to claim 18 wherein superimposing comprises integrating the movie into the display of the panorama content object such that every frame of the movie is re-rendered in accordance with the virtual image meta data of the displayed panorama content.

20. The method according to one of claims 13-19 wherein the method further comprises the steps of
storing at least one user profile;
interpreting the information context of the displayed panorama content; and
choosing the advertising content object to be displayed based on at least one of a stored user profile, an information context of the displayed panorama content and/or the time of day.

21. The method according to one of claims 13-20 wherein the method further comprises the steps of integrating and tracking a placeholder object within the panorama content object and wherein the advertising content object is positioned within the placeholder object while being displayed.

22. The method according to claim 13-21 wherein the position of the advertising content object is tracked within the panorama content object such that the user may change the viewing angle of the panorama content object within a range of up to a 360 degree and the advertising content object is re-rendered matching the virtual image meta data according to the viewing angle currently being displayed.

23. The method according to claim 18 wherein the advertising content object is re-rendered such that any of the frames of the movie is re-rendered in real-time.

24. The method according to any of claims 13-23 wherein the method further comprises means for re-directing a user upon request, wherein the displayed advertising content object is enriched with vendor meta data such that the user upon is redirected upon request according to the vendor meta data.

25. A computer-readable medium having stored thereon computer-readable instructions that, when run on a computer, are configure to perform the steps of the method of any of claims 13-24.
